# EUROPÄISCHE PATENTANMELDUNG

(11) **EP 3 322 056 A1**
(43) Veröffentlichungstag der Anmeldung: **16.05.2018**
(21) Anmeldenummer: 17306567.3
(22) Anmeldetag: 13.11.2017
(51) Int. Cl.: H02G 3/14

(54) **BEFESTIGUNGSMODUL, ELEKTRISCHES/ELEKTRONISCHES INSTALLATIONSGERÄT SOWIE VERFAHREN ZUR MONTAGE EINES ELEKTRISCHEN/ELEKTRONISCHEN INSTALLATIONSGERÄTS**

(30) Priorität: 14.11.2016 DE 102016121828
(71) Anmelder: Berker GmbH & Co. KG, 58579 Schalksmühle (DE)
(72) Erfinder: KLAUER, Wilfried, 58091 Hagen (DE)
(74) Vertreter: Nuss, Laurent

(57) **Zusammenfassung**

Die Erfindung betrifft ein Befestigungsmodul (10) zur Befestigung eines Funktionsmoduls (60) in einer in eine Wand oder Wandung (100) eingebrachten Öffnung (110), mit einem ersten Rahmenteil (20) und einem zweiten Rahmenteil (40), das mit dem ersten Rahmenteil (20) verbunden ist. Die Erfindung betrifft ferner ein elektrisches/elektronisches Installationsgerät (1) umfassend ein solches Befestigungsmodul (10) sowie ein Verfahren zur Montage eines solchen elektrischen/elektronischen Installationsgerätes (1).

## Beschreibung

Die Erfindung betrifft ein Befestigungsmodul zur Befestigung eines Funktionsmoduls in einer in eine Wand oder in eine Wandung eingebrachte Öffnung sowie ein elektrisches/elektronisches Installationsgerät und ein Verfahren zur Montage des elektrischen/elektronischen Installationsgeräts.

Derartige elektrische/elektronische Installationsgeräte sowie deren Befestigungsmodule sind in zahlreichen Ausführungsformen und für verschiedenste Anwendungen bekannt. Darüber hinaus werden die bekannten Ausführungsformen in unterschiedlicher Weise an unterschiedlichen Orten befestigt. So gibt es beispielsweise neben der direkten Anbringung eines elektrischen/elektronischen Installationsgerätes in einer Wand auch die Anbringung in Wandungen, beispielsweise Wandungen von Kabelkanälen und/oder Wandungen, insbesondere Wandvertäfelungen aus Holz, Kunststoff oder Rigips.

Werden elektrische/elektronische Installationsgeräte in medizinischen Bereichen verwendet, beispielsweise in einem Operationssaal, so sind an diese strenge Hygieneanforderungen zu stellen. So sollten derartig eingesetzte Installationsgeräte besonders einfach zu reinigen sein.

Es ist die Aufgabe der vorliegenden Erfindung, ein elektrisches/elektronisches Installationsgerät bereit zu stellen, welches in einfacher Weise am Einsatzort gereinigt werden kann.

Die Aufgabe wird erfindungsgemäß durch ein Befestigungsmodul gelöst, welches zur Befestigung eines Funktionsmoduls in einer in eine Wand oder in eine Wandung eingebrachte Öffnung geeignet ist. Das Befestigungsmodul umfasst ein erstes Rahmenteil und ein zweites Rahmenteil. Das erste Rahmenteil weist wenigstens ein Befestigungselement zur Befestigung des ersten Rahmenteils in der Öffnung und wenigstens ein erstes Rastelement auf. Das zweite Rahmenteil weist wenigstens ein zweites Rastelement auf, welches zur Verbindung des ersten Rahmenteils mit dem zweiten Rahmenteil formschlüssig mit dem ersten Rastelement verbunden ist. Das erste Rahmenteil umfasst einen Festlegeabschnitt, an welchen das Funktionsmodul durch eine Bewegung in einer Einbaurichtung in einer Einbauposition anlegbar ist und an welchen das Funktionsmodul mittels wenigstens einer Befestigungseinrichtung festlegbar ist. Das zweite Rahmenteil umfasst einen sich im Wesentlichen in einer annähernd parallel zur Wand oder Wandung verlaufenden Erstreckungsebene erstreckenden Deckabschnitt, der das Funktionsmodul zumindest abschnittsweise abdeckt, und wenigstens eine Zugangsöffnung, die einen Zugang zu einem Funktionsabschnitt des Funktionsmoduls ermöglicht. Zwischen dem ersten Rahmenteil und dem zweiten Rahmenteil ist ein Aufnahmeraum gebildet, welcher geeignet ist, in der Einbauposition des Funktionsmoduls zumindest einen Abschnitt des Funktionsmoduls aufzunehmen.

Die Ausgestaltung des erfindungsgemäßen Befestigungsmoduls erlaubt es, das elektrische/elektronische Installationsgerät derart in der Wand oder Wandung zu verbauen, dass dieses in einfacher Weise gereinigt werden kann, indem insbesondere der Funktionsabschnitt des Funktionsmoduls und der diesen umgebenden Deckabschnitt in einfacher Weise abgewischt und desinfiziert werden kann.

Vorzugsweise ist das zweite Rahmenteil und/oder der Deckabschnitt mit einer glatten oder annähernd glatten Oberfläche versehen, die weiterhin vorzugsweise einfach gereinigt werden kann.

In einer bevorzugten Ausgestaltung umfasst das wenigstens eine Befestigungselement ein Klemmelement mit einem Innengewinde und ein sich im Wesentlichen in Einbaurichtung erstreckendes Schraubelement mit einem Außengewinde, wobei das erste Rahmenteil ferner für jedes Befestigungselement ein Führungselement aufweist, das sich im Wesentlichen parallel zur Einbaurichtung erstreckt, wobei Innengewinde, Außengewinde und Führungselement derart ausgebildet und angeordnet sind, dass eine Drehbewegung des Schraubelements in eine translatorische Bewegung des Klemmelements in oder entgegen der Einbaurichtung überführt wird.

Durch diese Ausgestaltung lässt sich das erste Rahmenteil in einfacher Weise in der Öffnung festlegen, bevor das zweite Rahmenteil mit dem ersten Rahmenteil verbunden wird.

Vorzugsweise umfasst das erste Rahmenteil wenigstens einen ersten Anlageabschnitt, der an einer Oberfläche der Wand oder Wandung benachbart zur Öffnung angeordneten ersten Anlagefläche anlegbar ist und der sich vorzugsweise in Wesentlichen entlang der Erstreckungsebene erstreckt.

In einer weiteren bevorzugten Ausgestaltung umfasst das zweite Rahmenteil wenigstens einen zweiten Anlageabschnitt, der an einer Oberfläche der Wand oder Wandung benachbart zur Öffnung angeordneten zweiten Anlagefläche anlegbar ist und der sich vorzugsweise in Wesentlichen entlang der Erstreckungsebene erstreckt.

Diese Ausgestaltungen ermöglichen es, einem etwaig ungenau ausgeschnittenen Rand der Öffnung derart abzudecken, dass das elektrische/elektronische Installationsgerät und die zu diesem angrenzende Wandfläche ein ansprechendes Äußeres aufweist.

Vorzugsweise weist der Deckabschnitt und/oder der erste Anlageabschnitt und/oder der zweite Anlageabschnitt in Bezug auf eine Oberfläche der Wand oder Wandung in Einbaurichtung eine Bauhöhe auf, die weniger als ca. 20 mm, vorzugsweise weniger als ca. 15 mm, weiterhin vorzugsweise ca. 10 mm beträgt.

Diese Ausgestaltung vereinfacht weiterhin das Reinigen des elektrischen/elektronischen Installationsgerätes.

In einer bevorzugten Ausgestaltung umfasst das erste Rahmenteil ferner wenigstens einen ersten Gehäuseabschnitt, der im Wesentlichen parallel zur Einbaurichtung verläuft und an eine im Wesentlichen parallel zur Einbaurichtung verlaufende erste Innenseite der Öffnung anlegbar ist, wobei vorzugsweise das erste Rastelement an dem ersten Gehäuseabschnitt angeordnet ist.

Diese Ausgestaltung ermöglicht einerseits einen festen Sitz des ersten Rahmenteils in der Öffnung, insbesondere durch Formschluss, und ermöglicht eine sichere Verbindung von dem ersten Rahmenteil mit dem zweiten Rahmenteil mittels des ersten Rastelements und des zweiten Rastelements.

Vorzugsweise umfasst das zweite Rahmenteil ferner wenigstens einen zweiten Gehäuseabschnitt, der im Wesentlichen parallel zur Einbaurichtung und/oder zum ersten Gehäuseabschnitt verläuft, wobei vorzugsweise das zweite Rastelement an dem zweiten Gehäuseabschnitt angeordnet ist.

Diese Ausgestaltung ermöglicht ebenfalls den festen und sicheren Sitz des ersten Rahmenteils in der Öffnung und ermöglicht ein festes und sicheres Verbinden des ersten Rahmenteils mit dem zweiten Rahmenteil durch das erste Rastelement und das zweite Rastelement.

In einer bevorzugten Ausgestaltung sind das zweite Rahmenteil und die Zugangsöffnung derart ausgebildet, dass der Funktionsabschnitt im Bereich der Zugangsöffnung zumindest abschnittsweise in der Erstreckungsebene liegt, vorzugsweise im Bereich der Zugangsöffnung zumindest abschnittsweise entgegen der Einbaurichtung von der Erstreckungsebene vorspringt.

Diese Ausgestaltung ermöglicht ein einfaches und sicheres Bedienen des Funktionsmoduls mittels des Funktionsabschnitts.

In einer weiteren bevorzugten Ausgestaltung ist an dem zweiten Rahmenteil, vorzugsweise an dem zweiten Anlageabschnitt eine Aussparung gebildet, in welche ein Abschnitt eines Werkzeuges einführbar ist, um mittels eines durch das Werkzeug und die Wand oder Wandung, vorzugsweise der zweiten Anlagefläche der Wand oder Wandung gebildeten Hebel das zweite Rahmenteil von dem ersten Rahmenteil zu lösen.

Diese Ausgestaltung ermöglicht das einfache Lösen des zweiten Rahmenteils von dem ersten Rahmenteil, um beispielsweise das Funktionsmodul zu entfernen oder auszutauschen.

Die Aufgabe wird erfindungsgemäß ferner durch ein elektrisches/elektronisches Installationsgerät gelöst, welches zur Installation in einer in eine Wand oder in eine Wandung eingebrachte Öffnung geeignet ist. Das elektrische/elektronische Installationsgerät umfasst ein erfindungsgemäßes Befestigungsmodul, wenigstens eine Befestigungseinrichtung und ein Funktionsmodul. Das Funktionsmodul ist mittels der Befestigungseinrichtung an dem ersten Rahmenteil festgelegt und zumindest ein Abschnitt des Funktionsmoduls ist in dem Aufnahmeraum aufgenommen.

Vorzugsweise umfasst das Funktionsmodul ein Gerät, zwei Geräte oder mehr als zwei Geräte.

In einer bevorzugten Ausgestaltung kann das Gerät oder die Geräte in einem gemeinsamen Gehäuse aufgenommen sein.

Vorzugsweise ist das Gerät oder jedes der Geräte mit dem Gehäuse mittels wenigstens einer Befestigungsschraube verbunden.

Die Aufgabe wird erfindungsgemäß ferner durch ein Verfahren zur Montage eines elektrischen/elektronischen Installationsgeräts gelöst. Das erfindungsgemäße Verfahren zur Montage umfasst folgende Verfahrensschritte:
a) Bereitstellen des ersten Rahmenteils;
b) Befestigen des ersten Rahmenteils in der Öffnung mittels des wenigstens einen Befestigungselements;
c) Bereitstellen des Funktionsmoduls;
d) Positionieren des Funktionsmoduls in die Einbauposition durch Anlegen des Funktionsmoduls an den Festlegeabschnitt mittels einer Bewegung des Funktionsmoduls in der Einbaurichtung;
e) Festlegen des Funktionsmoduls an dem Festlegeabschnitt mittels der Befestigungseinrichtung;
f) Positionieren des zweiten Rahmenteils derart, dass Funktionsmodul zumindest teilweise bedeckt wird und ein Zugang des Funktionsabschnitts ermöglicht wird; und
g) Verbinden des ersten Rahmenteils mit dem zweiten Rahmenteil durch formschlüssiges Verbinden des ersten Rastmittels mit dem zweiten Rastmittel mittels einer Bewegung des zweiten Rahmenteils in Einbaurichtung.

Vorzugsweise umfasst das Verfahren folgende weitere Verfahrensschritte:
- Einbringen vierer Löcher in der Wand oder Wandung mittels eines Bohrers, sodass die Löcher die Ecken der Öffnung bilden ;
- Sägen des zwischen den Löchern befindlichen Wandabschnitts zur Bildung der Öffnung.

Vorzugsweise werden die vier Löcher derart angeordnet, dass diese die Ecken eines Rechtecks bilden.

Vorzugsweise umfasst das Verfahren folgende weitere Verfahrensschritte:
- Bereitstellen eines Gehäuses und wenigstens eines Gerätes ;
- Verbinden des wenigstens einen Gerätes mit dem Gehäuse zur Bildung des Funktionsmoduls.

In einer bevorzugten Ausgestaltung umfasst das Verfahren folgende weitere Verfahrensschritte:
- Einführen eines Endabschnitts eines Werkzeugs in die Aussparung ;
- Bilden eines Hebels durch das Werkzeug und die Wand oder Wandung, vorzugsweise die zweite Anlagefläche der Wand oder Wandung;
- Lösen des zweiten Rahmenteils von dem ersten Rahmenteil durch Ausüben einer Hebelkraft auf den Hebel.

Einzelheiten und weitere Vorteile des erfindungsgemäßen Befestigungsmodulmoduls, des erfindungsgemäßen elektrischen/elektronischen Installationsgeräts sowie des Verfahrens zur Montage des elektrischen/elektronischen Installationsgeräts werden anhand zweier nachfolgend beschriebenen Ausführungsbeispiele erläutert.

Dabei veranschaulichen im Einzelnen:
Fig. 1 zeigt eine perspektivische Ansicht in Explosionsdarstellung eines elektrischen/elektronischen Installationsgeräts nach einem ersten Ausführungsbeispiel;
Fig. 2 zeigt eine Draufsicht des in einer Öffnung befestigten elektrischen/elektronischen Installationsgeräts nach dem ersten Ausführungsbeispiel in einer Einbauposition;
Fig. 3 zeigt eine Schnittansicht des elektrischen/elektronischen Installationsgeräts nach dem ersten Ausführungsbeispiel in der Einbauposition gemäß der in Fig. 2 wiedergegebenen Schnittlinie Y - Y ;
Fig. 4 zeigt eine Detailansicht des elektrischen/elektronischen Installationsgeräts nach dem ersten Ausführungsbeispiel in der Einbauposition gemäß dem in Fig. 3 wiedergegebenen Ausschnitts Z ;
Fig. 5 zeigt eine perspektivische Detailansicht des elektrischen/elektronischen Installationsgeräts nach dem ersten Ausführungsbeispiel;
Fig. 6 zeigt eine Schnittansicht des elektrischen/elektronischen Installationsgeräts nach dem ersten Ausführungsbeispiel;
Fig. 7 zeigt eine perspektivische Ansicht in Explosionsdarstellung eines elektrischen/elektronischen Installationsgeräts nach einem zweiten Ausführungsbeispiel.

Die Erfindung betrifft ein elektrisches/elektronisches Installationsgerät 1 zur Installation in einer in eine Wand oder Wandung 100 eingebrachte Öffnung 110. Das elektrische/elektronische Installationsgerät 1 umfasst ein Befestigungsmodul 10 und ein Funktionsmodul 60.

Die Erfindung betrifft ferner ein Befestigungsmodul 10 zur Befestigung eines Funktionsmoduls 60 in einer in eine Wand oder Wandung 100 eingebrachte Öffnung 110.

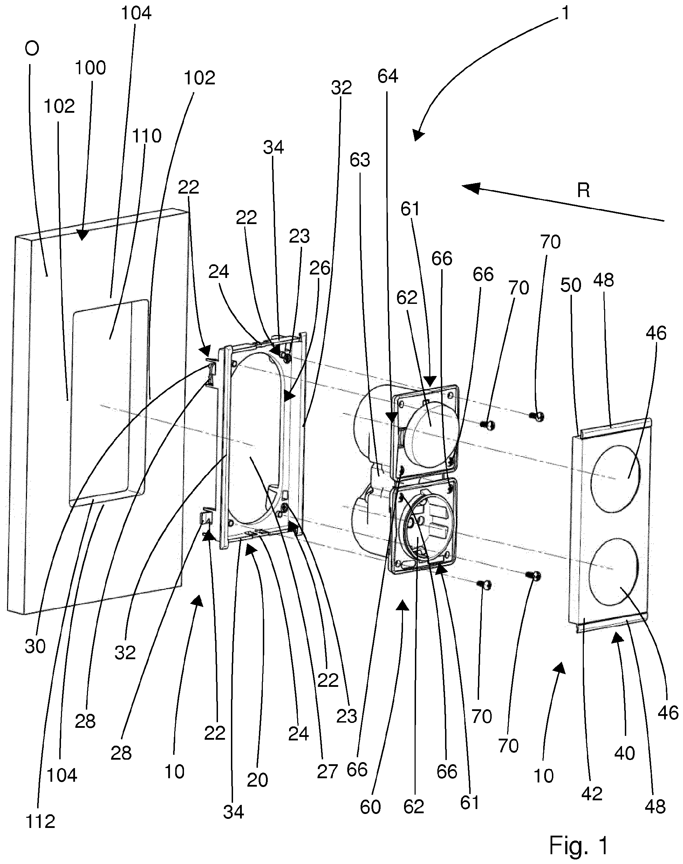

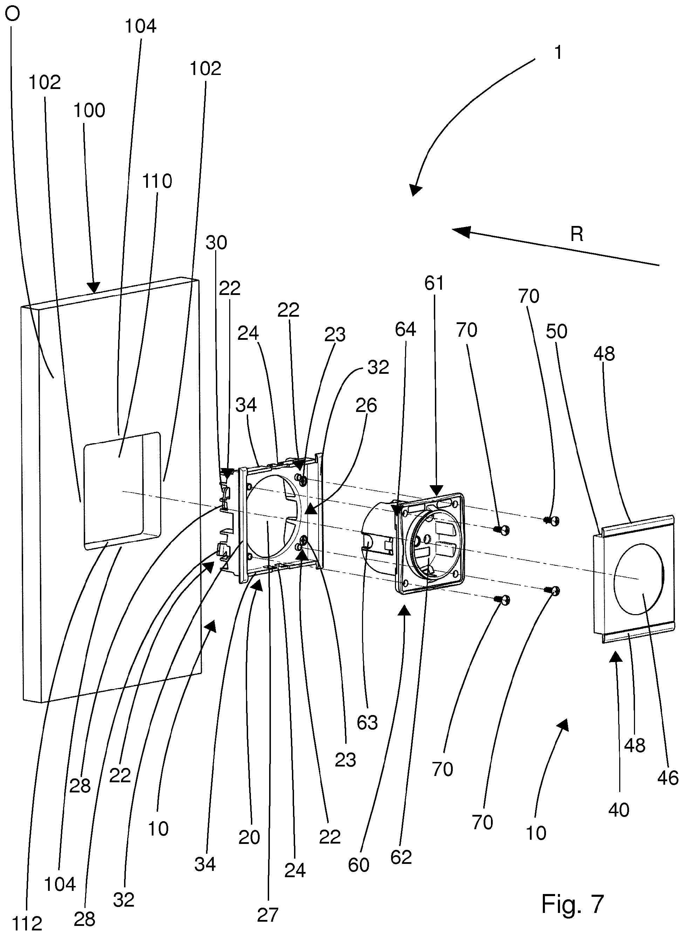

Wie insbesondere die Figuren 1 und 7 zu erkennen geben, umfasst das Befestigungsmodul 10 nach beiden Ausführungsbeispielen ein erstes Rahmenteil 20 und ein zweites Rahmenteil 40. Das erste Rahmenteil 20 weist wenigstens ein Befestigungselement 22 zur Befestigung des ersten Rahmenteils 20 in der Öffnung 110 und wenigstens ein Rastelement 24 auf.

Das Befestigungselement 22 kann ein Klemmelement 28 mit einem Innengewinde und ein sich im Wesentlichen in Einbaurichtung R erstreckendes Schraubelement 30 mit einem Außengewinde umfassen, wobei das erste Rahmenteil 20 ferner für jedes Befestigungselement 22 ein Führungselement 23 aufweisen kann, das sich im Wesentlichen parallel zur Einbaurichtung R erstreckt, wobei Innengewinde, Außengewinde und Führungselement 23 derart ausgebildet und angeordnet sein können, dass eine Drehbewegung des Schraubelements 30 in eine translatorische Bewegung des Klemmelements 28 in oder entgegen der Einbaurichtung R überführt werden kann.

Das zweite Rahmenteil 40 weist wenigstens ein zweites Rastelement 44 auf, welches zur Verbindung des ersten Rahmenteils 20 mit dem zweiten Rahmenteil 40 formschlüssig mit dem ersten Rastelement 24 verbunden ist. Das erste Rahmenteil 20 umfasst einen Festlegeabschnitt 26, an welchen das Funktionsmodul 60 durch eine Bewegung in der Einbaurichtung R in einer Einbauposition anlegbar ist und an welchem das Funktionsmodul 60 mittels wenigstens einer Befestigungseinrichtung 70 festlegbar ist.

In einer bevorzugten Ausgestaltung ist die Befestigungseinrichtung 70 durch eine Schraube gebildet.

Gemäß beiden Ausführungsbeispielen kann das Funktionsmodul 60 insgesamt vier als Schrauben ausgebildete Befestigungseinrichtungen 70 aufweisen, die vorzugsweise in Eckbereichen des Funktionsmoduls 60 angeordnet sind.

Das zweite Rahmenteil 40 umfasst einen sich im Wesentlichen in einer annähernd parallel zur Wand oder Wandung 100 verlaufenden Erstreckungsebene erstreckenden Deckabschnitt 42, der das Funktionsmodul 60 zumindest abschnittsweise abdeckt, und wenigstens eine Zugangsöffnung 46, die einen Zugang zu einem Funktionsabschnitt 62 des Funktionsmoduls ermöglicht.

Vorzugsweise ist der Funktionsabschnitt 62 fluchtend mit der Zugangsöffnung 46 des Deckabschnitts 42 angeordnet. Der Funktionsabschnitt 62 des Funktionsmoduls kann beispielsweise eine Steckdose, eine Wippe eines Lichtschalters oder ein Drehknopf eines Dimmers sein.

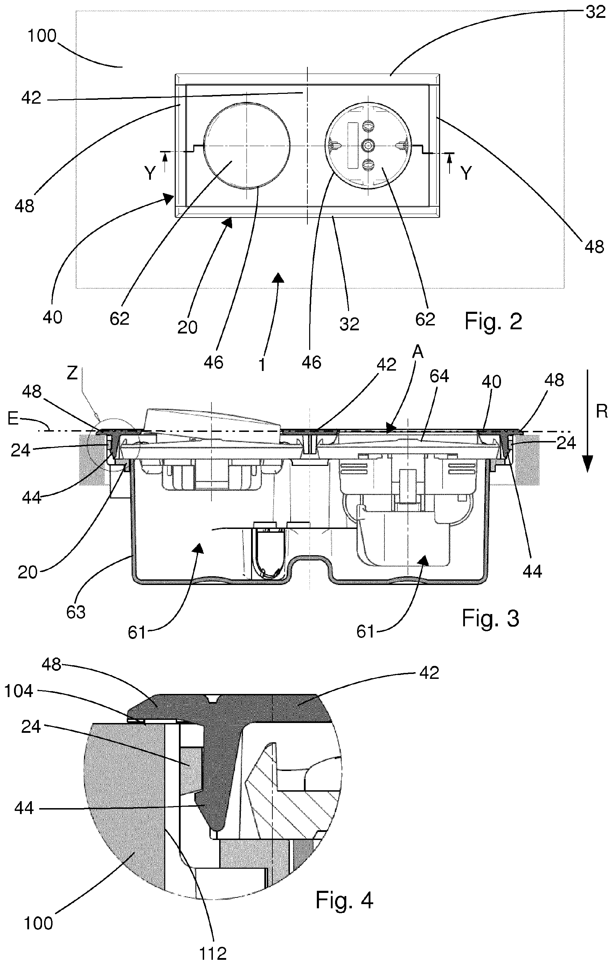

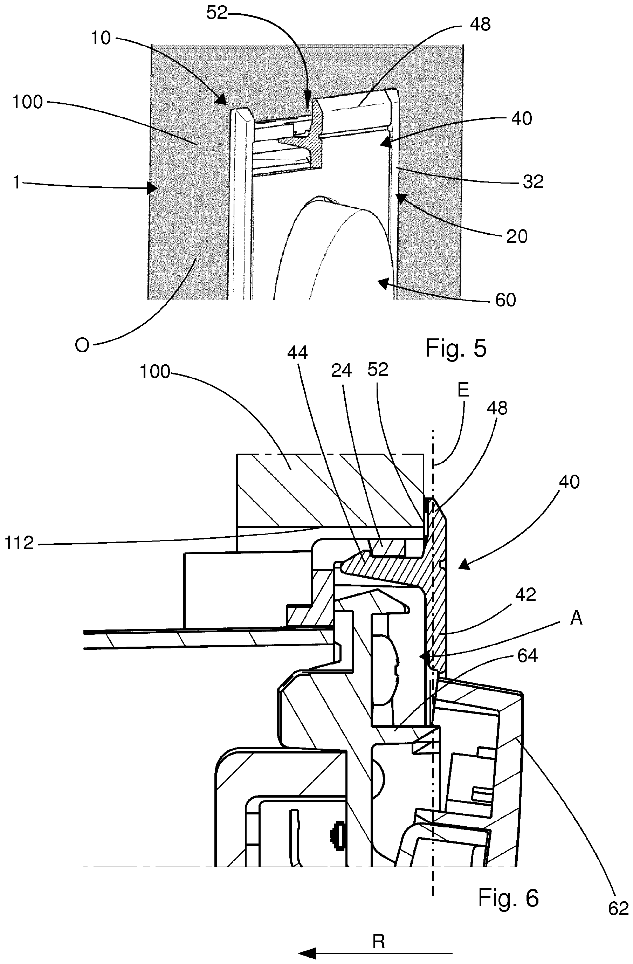

Wie insbesondere die Figuren 3 und 6 zu erkennen geben, ist zwischen dem ersten Rahmenteil 20 und dem zweiten Rahmenteil 40 ein Aufnahmeraum A gebildet, welcher geeignet ist, in der Einbauposition des Funktionsmoduls 60 zumindest einen Abschnitt 64 des Funktionsmoduls 60 aufzunehmen.

In einer bevorzugten Ausgestaltung kann der Abschnitt 64 des Funktionsmoduls 60 formschlüssig in dem Aufnahmeraum A aufgenommen sein.

Das Klemmelement 28, das auch als Klaue bezeichnet werden kann, kann durch Drehung des Schraubelements 30 mittels eines Werkzeugs derart nach Außen geschwenkt und entgegen der Einbaurichtung R bewegt werden, dass das Klemmelement 28 an einer Rückseite der Wand oder Wandung 110 angreift, um das erste Rahmenteil 20 in der Öffnung 110 festzulegen.

Wie insbesondere die Figuren 1, 2 und 7 zu erkennen geben, kann das erste Rahmenteil 20 wenigstens einen ersten Anlageabschnitt 32 umfassen, der an einer Oberfläche O der Wand oder Wandung 100 benachbart zur Öffnung 110 an eine erste Anlagefläche 102 anlegbar ist, wobei sich der Anlageabschnitt 32 im Wesentlichen entlang der Erstreckungsebene erstreckt.

In einer bevorzugten Ausgestaltung kann das zweite Rahmenteil 40 wenigstens eine zweiten Anlageabschnitt 48 umfassen, der an einer Oberfläche O der Wand oder Wandung 100 benachbart zur Öffnung 110 an eine zweite Anlagefläche 104 anlegbar ist, wobei sich auch der wenigstens eine zweite Anlageabschnitt 48 vorzugsweise im Wesentlichen entlang der Erstreckungsebene erstreckt.

Gemäß beider figürlich widergegeben Ausführungsbeispiele kann das erste Rahmenteil 20 zwei parallel verlaufende und gegenüberliegend angeordnete Anlageabschnitte 32 umfassen, die an der Oberfläche O der Wand oder Wandung 100 benachbart zur Öffnung 110 an die erste Anlagefläche 102 anlegbar sind.

In einer weiteren bevorzugten Ausgestaltung umfasst das zweite Rahmenteil 40 zwei Anlageabschnitte 48, die an der Oberfläche O der Wand oder Wandung 100 benachbart zur Öffnung 110 an die zweite Anlagefläche 104 anlegbar sind und die sich vorzugsweise im Wesentlichen entlang der Erstreckungsebene erstrecken.

Demgemäß kann das Befestigungsmodul 10 mittels der zwei ersten Anlageabschnitte 32 und der zwei zweiten Anlageabschnitte 48 einen die Öffnung 110 umlaufenden Rahmen bilden, der den Rand der Öffnung 110 abdeckt. Somit ist ein ansehnliches Erscheinungsbild des elektrischen/elektronischen Installationsgerätes 1 gewährleistet.

In einer bevorzugten Ausgestaltung weist der Deckabschnitt 42 und/oder der erste Anlageabschnitt 32 und/oder der zweite Anlageabschnitt 48 in Bezug auf die Oberfläche O der Wand oder Wandung 110 in Einbaurichtung R eine Bauhöhe auf, die weniger als 20 mm, vorzugsweise weniger als 15 mm, weiterhin vorzugsweise ca. 10 mm beträgt. Die geringe Bauhöhe ermöglicht es, die Oberfläche des Befestigungsmoduls 10 beziehungsweise die Oberfläche des elektrischen/elektronischen Installationsgerätes 1 durch einfaches Abwischen zu reinigen und zu desinfizieren.

Wie insbesondere die Figuren 1 und 7 zu erkennen geben, kann das erste Rahmenteil 20 wenigstens einen ersten Gehäuseabschnitt 34 umfassen, der im Wesentlichen parallel zur Einbaurichtung R verläuft und der an eine im Wesentlichen parallel zur Einbaurichtung R der ersten Innenseite 112 der Öffnung 110 anlegbar ist. Vorzugsweise ist dabei das erste Rastelement 24 an dem ersten Gehäuseabschnitt 34 angeordnet.

Diese Ausgestaltung ermöglicht einen sicheren Sitz der ersten Rahmenteils 20 in der Öffnung 110.

In einer weiteren bevorzugten Ausgestaltung umfasst das zweite Rahmenteil 40 ferner wenigstens einen zweiten Gehäuseabschnitt 50, der im Wesentlichen parallel zur Einbaurichtung R und/oder zum ersten Gehäuseabschnitt 34 verläuft. Vorzugsweise ist dabei das zweite Rastelement 44 an dem zweiten Gehäuseabschnitt 50 angeordnet.

Diese Ausgestaltung ermöglicht einen sicheren Sitz des zweiten Rahmenteils 40 an dem ersten Rahmenteil 20.

In einer bevorzugten Ausgestaltung ist an dem zweiten Rahmenteil 40, vorzugsweise an dem zweiten Anlageabschnitt 48 des zweiten Rahmenteils 40 eine Aussparung 52 gebildet, in welcher ein Abschnitt eines Werkzeugs einführbar ist, um mittels eines durch das Werkzeug und die Wand oder Wandung 100, vorzugsweise der zweiten Anlagefläche 104 der Wand oder Wandung 100 gebildeten Hebel das zweite Rahmenteil 40 von dem ersten Rahmenteil 20 zu lösen. Diese Ausgestaltung ist insbesondere in den Figuren 5 und 6 wiedergegeben.

Wie weiterhin insbesondere die Figuren 1 und 7 zu erkennen geben, kann das Funktionsmodul 60 ein Gerät 61 oder zwei Geräte 61 umfassen. Das Funktionsmodul 60 kann gegebenenfalls auch mehr als zwei Geräte 61 umfassen. Wie insbesondere in den Figuren 1 und 7 wiedergegeben, kann das Gerät 61 oder die Geräte 61 in einem Gehäuse 63 untergebracht sein. Die einzelnen Geräte 61 können jeweils mittels wenigstens einer Befestigungsschraube 66, vorzugsweise wenigstens zwei Befestigungsschrauben 66 mit dem Gehäuse 63 verbunden sein. Das Gehäuse 63 kann auch als Dose oder Berührungsschutzdose bezeichnet werden und dient dazu, den Benutzer oder Installateur vor der Berührung spannungsführender Bestandteile des Funktionsmoduls 60 zu schützen. Gemäß beider Ausführungsbeispiele ist das Funktionsmodul 60 mittels der Befestigungseinrichtung 70 an den ersten Rahmenteil 20 festgelegt und zumindest ein Abschnitt 64 des Funktionsmoduls 60 ist in dem Aufnahmeraum A aufgenommen.

Das erste Rahmenteil 20 kann ferner mit einem Ausschnitt 27 versehen sein, durch welchen hindurch das Gehäuse 63 des Funktionsmoduls 60 zumindest abschnittsweise in der Einbauposition in Einbaurichtung R hindurchtritt.

Das elektrische/elektronische Installationsgerät 1 gemäß beider widergegebenen Ausführungsbeispiele kann mittels eines Montageverfahrens, welches folgende Verfahrensschritte umfasst, montiert werden :
a) Bereitstellen des ersten Rahmenteils 20 ;
b) Befestigen des ersten Rahmenteils 20 in der Öffnung 110 mittels des wenigstens einen Befestigungselements 22 ;
c) Bereitstellen des Funktionsmoduls 60 ;
d) Positionieren des Funktionsmoduls 60 in die Einbauposition durch Anlegen des Funktionsmoduls 60 an den Festlegeabschnitt 26 mittels einer Bewegung des Funktionsmoduls 60 in der Einbaurichtung R;
e) Festlegen des Funktionsmoduls 60 an dem Festlegeabschnitt 26 mittels der Befestigungseinrichtung 70;
f) Positionieren des zweiten Rahmenteils 40 derart, dass Funktionsmodul 60 zumindest teilweise bedeckt wird und ein Zugang des Funktionsabschnitts 62 ermöglicht wird; und
g) Verbinden des ersten Rahmenteils 20 mit dem zweiten Rahmenteil 40 durch formschlüssiges Verbinden des ersten Rastmittels 24 mit dem zweiten Rastmittel 44 mittels einer Bewegung des zweiten Rahmenteils 40 in Einbaurichtung R.

Vorzugsweise wird vor Schritt b), weiterhin vorzugsweise vor Schritt a) die Öffnung 110 in die Wandung 100 eingebracht. Die Öffnung 110 wird vorzugsweise in die Wandung 100 eingebracht, indem vier Löcher in die Wand oder Wandung 100 gebohrt werden, vorzugsweise in einer rechteckigen Anordnung, und anschließend mittels einer Säge ein Einschnitt zwischen den Löchern erfolgt, um ein Stück aus der Wand oder Wandung 100 zu entnehmen, wodurch die Öffnung 110 gebildet ist. Vorzugsweise ist die Befestigungseinrichtung 70 eine Schraube und das in Schritt e) erfolgende Festlegen des Funktionsmoduls 60 an dem Festlegeabschnitt 26, erfolgt durch Eindrehen dieser Schraube in das Funktionsmodul 60 und in das erste Rahmenteil 20.

Vorzugsweise weisen das Funktionsmodul 60 und das erste Rahmenteil 20 im Bereich des Festlegeabschnitts 26 komplementäre Flächen auf, sodass bei einer Bewegung des Funktionsmoduls 60 in der Einbaurichtung R das Funktionsmodul in die Einbauposition ausgerichtet wird.

Zum Lösen des zweiten Rahmenteils 40 von dem ersten Rahmenteil 20 kann ein Abschnitt eines Werkzeugs in die Aussparung 52 eingeführt werden und mit dem Werkzeug und der Wand oder Wandung 100 ein Hebel gebildet werden, der es ermöglicht, durch Ausüben einer Kraft auf das Werkzeug das zweite Rahmenteil 40 entgegen der Einbaurichtung R von dem ersten Rahmenteil 20 zu lösen.

Selbstverständlich ist die Erfindung nicht auf die beschriebenen und dargestellten Ausführungsformen begrenzt. Änderungen, z. B. in den Ausführungsformen der verschiedenen Bestandteile oder Ersetzungen durch technische Äquivalente sind, soweit sie im Rahmen des beanspruchten Schutzbegehrens bleiben, jederzeit möglich.

## Patentansprüche

1. Befestigungsmodul zur Befestigung eines Funktionsmoduls (60) in einer in eine Wand oder in eine Wandung (100) eingebrachte Öffnung (110),
wobei das Befestigungsmodul (10) ein erstes Rahmenteil (20) und ein zweites Rahmenteil (40) umfasst,
wobei das erste Rahmenteil (20) wenigstens ein Befestigungselement (22) zur Befestigung des ersten Rahmenteils (20) in der Öffnung (110) und wenigstens ein erstes Rastelement (24) aufweist,
wobei das zweite Rahmenteil (40) wenigstens ein zweites Rastelement (44) aufweist, welches zur Verbindung des ersten Rahmenteils (20) mit dem zweiten Rahmenteil (40) formschlüssig mit dem ersten Rastelement (24) verbunden ist,
wobei das erste Rahmenteil (20) einen Festlegeabschnitt (26) umfasst, an welchen das Funktionsmodul (60) durch eine Bewegung in einer Einbaurichtung (R) in einer Einbauposition anlegbar ist und an welchen das Funktionsmodul (60) mittels wenigstens einer Befestigungseinrichtung (70) festlegbar ist,
wobei das zweite Rahmenteil (40) einen sich im Wesentlichen in einer annähernd parallel zur Wand oder Wandung verlaufenden Erstreckungsebene (E) erstreckenden Deckabschnitt (42), der das Funktionsmodul (60) zumindest abschnittsweise abdeckt, und wenigstens eine Zugangsöffnung (46), die einen Zugang zu einem Funktionsabschnitt (62) des Funktionsmoduls (60) ermöglicht, umfasst, und
wobei zwischen dem ersten Rahmenteil (20) und dem zweiten Rahmenteil (40) ein Aufnahmeraum (A) gebildet ist, welcher geeignet ist, in der Einbauposition des Funktionsmoduls (60) zumindest einen Abschnitt (64) des Funktionsmoduls (60) aufzunehmen.

2. Befestigungsmodul nach Anspruch 1, **dadurch gekennzeichnet, dass** das wenigstens eine Befestigungselement (22) ein Klemmelement (28) mit einem Innengewinde und ein sich im Wesentlichen in Einbaurichtung (R) erstreckendes Schraubelement (30) mit einem Außengewinde umfasst, wobei das erste Rahmenteil (20) ferner für jedes Befestigungselement (22) ein Führungselement (23) aufweist, das sich im Wesentlichen parallel zur Einbaurichtung (R) erstreckt, wobei Innengewinde, Außengewinde und Führungselement (23) derart ausgebildet und angeordnet sind, dass eine Drehbewegung des Schraubelements (30) in eine translatorische Bewegung des Klemmelements (28) in oder entgegen der Einbaurichtung (R) überführt wird.

3. Befestigungsmodul nach einem der Ansprüche 1 oder 2, **dadurch gekennzeichnet, dass** das erste Rahmenteil (20) wenigstens einen ersten Anlageabschnitt (32) umfasst, der an einer an einer Oberfläche (O) der Wand oder Wandung (100) benachbart zur Öffnung (110) angeordneten ersten Anlagefläche (102) anlegbar ist und der sich vorzugsweise in Wesentlichen entlang der Erstreckungsebene (E) erstreckt.

4. Befestigungsmodul nach einem der Ansprüche 1 bis 3, **dadurch gekennzeichnet, dass** das zweite Rahmenteil (40) wenigstens einen zweiten Anlageabschnitt (48) umfasst, der an einer an einer Oberfläche (O) der Wand oder Wandung (100) benachbart zur Öffnung (110) angeordneten zweiten Anlagefläche (104) anlegbar ist und der sich vorzugsweise in Wesentlichen entlang der Erstreckungsebene (E) erstreckt.

5. Befestigungsmodul nach einem der Ansprüche 1 bis 4, **dadurch gekennzeichnet, dass** der Deckabschnitt (42) und/oder der erste Anlageabschnitt (32) und/oder der zweite Anlageabschnitt (48) in Bezug auf eine Oberfläche (O) der Wand oder Wandung (110) in Einbaurichtung (R) eine Bauhöhe aufweist, die weniger als ca. 20 mm, vorzugsweise weniger als ca. 15 mm, weiterhin vorzugsweise ca. 10 mm beträgt.

6. Befestigungsmodul nach einem der Ansprüche 1 bis 5, **dadurch gekennzeichnet, dass** das erste Rahmenteil (20) ferner wenigstens einen ersten Gehäuseabschnitt (34) umfasst, der im Wesentlichen parallel zur Einbaurichtung (R) verläuft und an eine im Wesentlichen parallel zur Einbaurichtung (R) verlaufende erste Innenseite (112) der Öffnung (110) anlegbar ist, wobei vorzugsweise das erste Rastelement (24) an dem ersten Gehäuseabschnitt (34) angeordnet ist.

7. Befestigungsmodul nach einem der Ansprüche 1 bis 6, **dadurch gekennzeichnet, dass** das zweite Rahmenteil (40) ferner wenigstens einen zweiten Gehäuseabschnitt (50) umfasst, der im Wesentlichen parallel zur Einbaurichtung (R) und/oder zum ersten Gehäuseabschnitt (34) verläuft, wobei vorzugsweise das zweite Rastelement (44) an dem zweiten Gehäuseabschnitt (50) angeordnet ist.

8. Befestigungsmodul nach einem der Ansprüche 1 bis 7, **dadurch gekennzeichnet, dass** das zweite Rahmenteil (40) und die Zugangsöffnung (46) derart ausgebildet sind, dass der Funktionsabschnitt (62) im Bereich der Zugangsöffnung (46) zumindest abschnittsweise in der Erstreckungsebene (E) liegt, vorzugsweise im Bereich der Zugangsöffnung (46) zumindest abschnittsweise entgegen der Einbaurichtung (R) von der Erstreckungsebene (E) vorspringt.

9. Befestigungsmodul nach einem der Ansprüche 1 bis 8, **dadurch gekennzeichnet, dass** an dem zweiten Rahmenteil (40), vorzugsweise an dem zweiten Anlageabschnitt (48) eine Aussparung (52) gebildet ist, in welche ein Abschnitt eines Werkzeuges einführbar ist, um mittels eines durch das Werkzeug und die Wand oder Wandung (100), vorzugsweise der zweiten Anlagefläche (104) der Wand oder Wandung (100) gebildeten Hebel das zweite Rahmenteil (40) von dem ersten Rahmenteil (20) zu lösen.

10. Elektrisches/elektronisches Installationsgerät zur Installation in einer in eine Wand oder in eine Wandung (100) eingebrachte Öffnung (110), umfassend ein Befestigungsmodul (10) nach einem der Ansprüche 1 bis 9, wenigstens eine Befestigungseinrichtung (70) und ein Funktionsmodul (60), wobei das Funktionsmodul (60) mittels der Befestigungseinrichtung (70) an dem ersten Rahmenteil (20) festgelegt ist und zumindest ein Abschnitt (64) des Funktionsmoduls (60) in dem Aufnahmeraum (A) aufgenommen ist.

11. Verfahren zur Montage eines elektrischen/elektronischen Installationsgerätes (1) nach Anspruch 10, umfassend folgende Verfahrensschritte:
a) Bereitstellen des ersten Rahmenteils (20);
b) Befestigen des ersten Rahmenteils (20) in der Öffnung (110) mittels des wenigstens einen Befestigungselements (22);
c) Bereitstellen des Funktionsmoduls (60);
d) Positionieren des Funktionsmoduls (60) in die Einbauposition durch Anlegen des Funktionsmoduls (60) an den Festlegeabschnitt (26) mittels einer Bewegung des Funktionsmoduls (60) in der Einbaurichtung (R);
e) Festlegen des Funktionsmoduls (60) an dem Festlegeabschnitt (26) mittels der Befestigungseinrichtung (70);
f) Positionieren des zweiten Rahmenteils (40) derart, dass Funktionsmodul (60) zumindest teilweise bedeckt wird und ein Zugang des Funktionsabschnitts (62) ermöglicht wird; und
g) Verbinden des ersten Rahmenteils (20) mit dem zweiten Rahmenteil (40) durch formschlüssiges Verbinden des ersten Rastmittels (24) mit dem zweiten Rastmittel (44) mittels einer Bewegung des zweiten Rahmenteils (40) in Einbaurichtung (R).
